Europäisches Patentamt

European Patent Office

Office européen des brevets

(19)

(11) **EP 1 585 340 A2**

(12) **EUROPEAN PATENT APPLICATION**

(43) Date of publication:
**12.10.2005 Bulletin 2005/41**

(51) Int Cl.⁷: **H04N 7/50**, H04N 7/26

(21) Application number: **05006358.5**

(22) Date of filing: **23.03.2005**

| | |
|---|---|
| (84) Designated Contracting States: **AT BE BG CH CY CZ DE DK EE ES FI FR GB GR HU IE IS IT LI LT LU MC NL PL PT RO SE SI SK TR** Designated Extension States: **AL BA HR LV MK YU** | (72) Inventor: **Hamada, Mana** **Fukuoka-Shi Fukuoka-Ken, 812-0023 (JP)** |
| (30) Priority: **30.03.2004  JP 2004098928** | (74) Representative: **Balsters, Robert et al** **Novagraaf International S.A.** **25, avenue du Pailly** **1220 Les Avanchets - Geneva (CH)** |
| (71) Applicant: **MATSUSHITA ELECTRIC INDUSTRIAL CO., LTD.** **Kadoma-shi, Osaka 571-8501 (JP)** | |

(54) **Inverse prediction apparatus and decoding apparatus using the same**

(57)   An inverse prediction unit (12) inputs decoding information (1), which is variable-length-decoded data, and target macro block information (2), which indicates a target macro block. The inverse prediction unit (12) comprises: a brightness/chroma reference value-storing unit (3); a reference value-initializing unit (4); an inverse prediction calculation unit (5); a brightness/chroma prediction value-storing unit (6); and a following reference value-updating unit (7). When the target macro block is processed, the reference value-initializing unit (4) determines reference blocks to be initialized according to a predetermined criterion relating to five patterns. The following reference value-updating unit (7) calculates data of the reference blocks that are used in the following inverse prediction processes. It is insufficient that data of the reference blocks are stored until inverse prediction for a target macro block on the next line. A hardware cost for implementing an inverse prediction apparatus can be reduced.

Fig. 1

EP 1 585 340 A2

## Description

The present invention relates to an inverse prediction apparatus that performs inverse prediction processes to variable-length-decoded data of a target macro block, and a decoding apparatus using the same.

In recent years, information devices and terminals, which handle video data, rapidly spread, and the technique for compressing the video data is being standardized.

MPEG-4 defined by the MPEG (Moving Picture Experts Group) is one of standards for image compression technology. "MPEG-4 no subete (All about MPEG-4)" (Miki et al., 1998, Kogyo Chosakai Kabushiki-Gaisha) explains MPEG-4 specification fundamentally.

In MPEG-4, data of one screen is called a VOP (Video Object Plane). The VOP is composed of a plurality of macro blocks, which are rectangle regions of $16 \times 16$ pixels and are arranged vertically and horizontally. One macro block is the base unit of VOP processing.

The macro blocks are composed of intra macro blocks, which are encoded in the VOP to which the intra macro blocks belong, and inter macro blocks, which are not the intra macro blocks. Each of the intra macro books and the inter macro blocks is composed of six blocks, which are four brightness blocks and two chroma (Cb and Cr) blocks. Each of the six blocks consists of 8x8 pixels.

In order to prevent error propagation when decoding, MPEG-4 permits to arrange a synchronous word, which is composed of fixed-length signals indicating a specific bit pattern, in a bit stream.

Even if a decoding error occurs in the middle of the bit stream, once the synchronous word has been detected, the error does not spread after the synchronous word. In other words, it is guaranteed that error-less decoding can be performed after the synchronous word.

A VP (Video Packet) is composed of one or more macro blocks, and is a unit storing the synchronous word and encoded information thereafter. In other words, one VOP is composed of one or more VPs, and each of the VPs is composed of one or more macro blocks.

There is the following order in the macro blocks. The current macro block starts at the origin of a VOP, which is the upper-left macro block. The current macro block moves right. If the current macro block reaches the right end macro block of the VOP, then the next macro block is the left end macro block of the immediately below line. The current macro blocks moves further right and down, finally reaches the end of the VOP, which is the lower right macro block of the VOP. The order of macro blocks composing of the VP is defined similarly.

MPEG-4 defines the following method relating to inverse AC/DC prediction, which is simply called "inverse prediction" in this specification. The inverse prediction processes should be performed in the unit of a block belonging to a macro block.

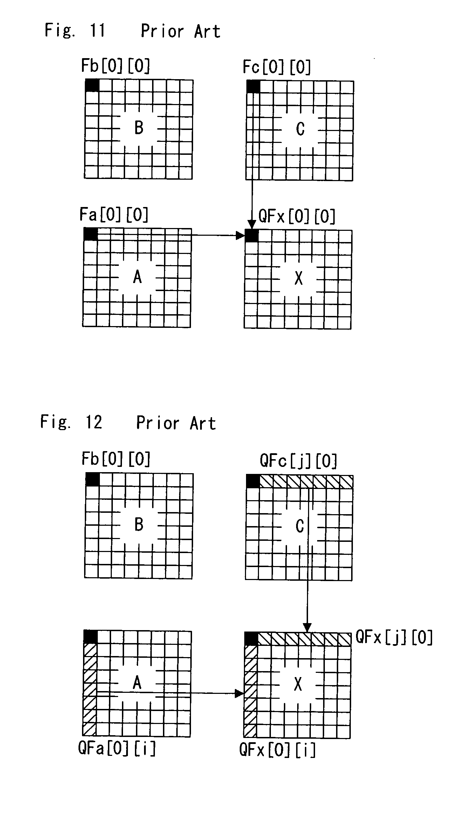

Fig. 11 is an explanatory drawing of conventional inverse DC prediction, and Fig. 12 is an explanatory drawing of conventional inverse AC prediction.

Referring to Fig. 11, the inverse DC prediction will now be explained. In Fig. 11, a block X is an object block of the inverse prediction, which is called a "target block", a block A is a block adjacently left to the block X, a block B is a block adjacently upper-left to the block X, and a block C is a block adjacently upper to the block X. The blocks A, B, and C are blocks that have been inverse-predicted prior to the target block.

It is assumed that Fa [0] [0] is a DC component after inverse quantization of the block A, that Fb [0] [0] is a DC component after the inverse quantization of the block B, and further that Fc [0] [0] is a DC component after the inverse quantization of the block C. In the inverse DC prediction, a reference block is determined according to a gradient of blocks adjacent to the target block X.

If

[Formula 1]

$$|Fa[0][0] - Fb[0][0]| < |Fb[0][0] - Fc[0][0]|$$

is fulfilled, the block C is the reference block, otherwise, the block A is the reference block. When either of the adjacent blocks A, B, and C exists at the outside of the VOP or the VP, or is an inter macro block, it is assumed that each of Fa [0] [0] and Fc [0] [0] is $2^{(N+2)}$ (N is the bit number of a pixel), and a gradient thereof is determined.

Next, the DC coefficient (QFx [0] [0]) of the block X is inverse-predicted utilizing the determined DC component of the reference block.

When the block C is a prediction reference block, the following formula is used.

[Formula 2]

$$QFx [0] [0] = PQFx [0] [0] + Fc[0] [0] \mathbin{/\!/} dc\_scaler$$

When the block A is a prediction reference block, the following formula is used.

[Formula 3]

$$QFx [0] [0] = PQFx[0] [0] + Fa[0] [0] \mathbin{/\!/} dc\_scaler$$

Herein, QFx [0] [0] is a DC component of an inverse prediction result of the block X, PQFx [0] [0] is a DC component of the target block X among variable-length-decoded data, and "dc_scaler" is a quantization scale when the block X has been quantized. An operator "//" indicates division and rounding in the direction of zero. The above processes are repeated until all DC coefficients of 6 blocks (four brightness blocks and two chroma blocks) have been determined.

Next, referring to Fig. 12, inverse AC prediction will now be explained. In inverse AC prediction processes, the reference block determined at the time of the inverse DC prediction processes is referred. In Fig. 12, the blocks X, A, B, and C are the same as those of Fig. 11. QFa [0] [i] (i: 1, 2, 3, 4, 5, 6, and 7) are AC coefficients of the block A, and QFc [j] [0] (j: 1, 2, 3, 4, 5, 6, and 7) are AC coefficients of the block C.

When the prediction reference block is the block A, the AC coefficients (QFx [0] [i]) of the block X are inverse-predicted as follows.

[Formula 4]

$$QFx [0] [i] = PQFx [0] [i] + (QFa [0] [i] * QPa) // QPx$$

When the prediction reference block is the block C, the AC coefficients (QFx [j] [0]) of the block X are inverse-predicted as follows.

[Formula 5]

$$QFx[j] [0] = PQFx[j] [0] + (QFc[j] [0] * QPc) // QPx$$

QFx [j] [i] are AC components of the inverse prediction result of the block X, PQFx [j] [i] are AC components of the variable-length-decoded target block X, QPx is a quantization scale when the block X has been quantized, QPa is a quantization scale when the block A has been quantized, and QPc is a quantization scale when the block C has been quantized. The operator "//" indicates division and rounding in the direction of zero.

When at least one of the adjacent blocks A, B, and C exists at the outside of the VOP or the VP, or is an inter macro block, it is assumed that QFa [0] [i], QFc [j] [0] are zero, and then inverse prediction is performed. As mentioned above, the inverse prediction processes defined in MPEG-4 are so complicated.

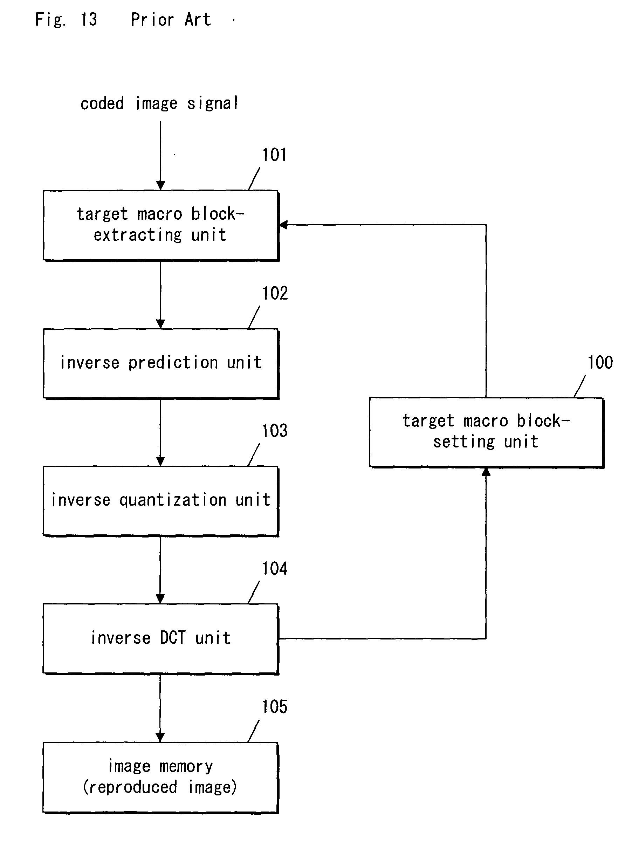

A document 1 (Japanese Patent Application Laid-Open number 2002-118853) discloses an implementing method for the inverse prediction processes. Referring Fig. 13 to Fig. 16, the implementing method will now be explained. Fig. 13 shows a conventional image decoding apparatus that decodes an intra macro block.

The image decoding apparatus comprises: a target macro block-setting unit 100; a target macro block-extracting unit 101; an inverse prediction unit 102; an inverse quantization unit 103; and an inverse DCT unit 104.

The target macro block-setting unit 100 sets a target macro block in a VOP by specifying a block number of the target macro block, for example. The target macro block-extracting unit 101 variable-length-decodes coded-image signals, and extracts data of the target macro block.

The inverse prediction unit 102 performs inverse prediction processes to the extracted data of the target macro block, and outputs quantization coefficients after the inverse prediction. The inverse quantization unit 103 inverse-quantizes the outputted quantization coefficients of the target macro block, and outputs DCT coefficients of the target macro block.

The inverse DCT unit 104 performs inverse DCT into the outputted DCT coefficients of the target macro block, and outputs reproduced image of the target macro block. The image decoding apparatus of Fig. 13 repeats the above processes for each macro block contained in the VOP. Consequently, a reproduced image of the VOP is stored in an image memory 105.

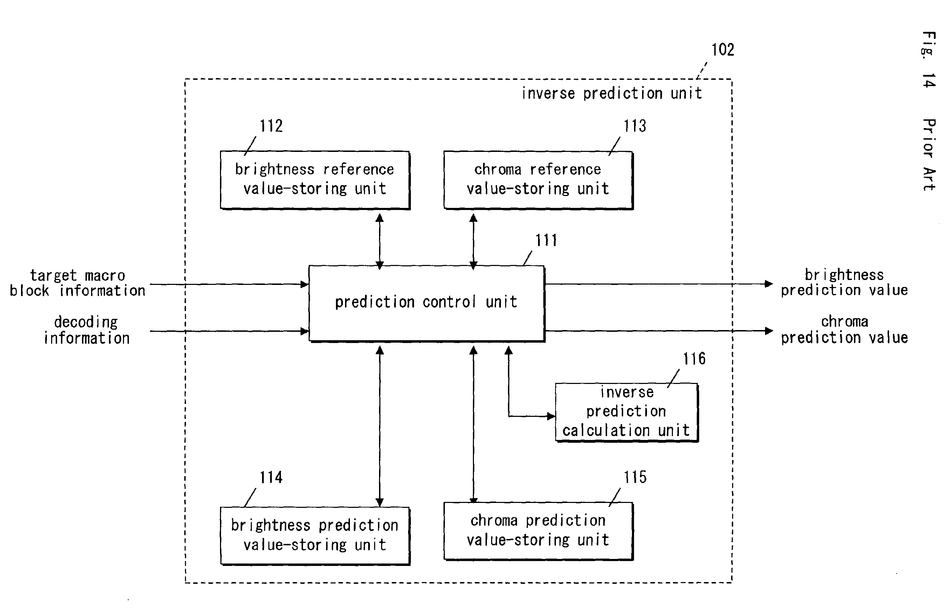

Fig. 14 is a block diagram illustrating the conventional inverse prediction unit. As shown in Fig. 14, the inverse prediction unit 102 comprises: a prediction control unit 111; a brightness reference value-storing unit 112; a chroma reference value-storing unit 113; a brightness prediction value-storing unit 114; a chroma prediction value-storing unit 115; and an inverse prediction calculation unit 116.

The brightness reference value-storing unit 112 stores reference values for brightness blocks of a target macro block. The chroma reference value-storing unit 113 stores reference values for chroma blocks of the target macro block.

The inverse prediction calculation unit 116 performs inverse prediction calculation based on the reference values stored by the brightness reference value-storing unit 112 and the chroma reference value-storing unit 113.

The brightness prediction value-storing unit 114 stores an inverse prediction result of the brightness blocks among data outputted from the inverse prediction calculation unit 116. The chroma prediction value-storing unit 115 stores an inverse prediction result of the chroma blocks among data outputted from the inverse prediction calculation unit 116.

The prediction control unit 111 copies data necessary for the prediction calculation for the target macro block, from the brightness prediction value-storing unit 114 to the brightness reference value-storing unit 112, and from the chroma prediction value-storing unit 115 to the chroma reference value-storing unit 113, respectively.

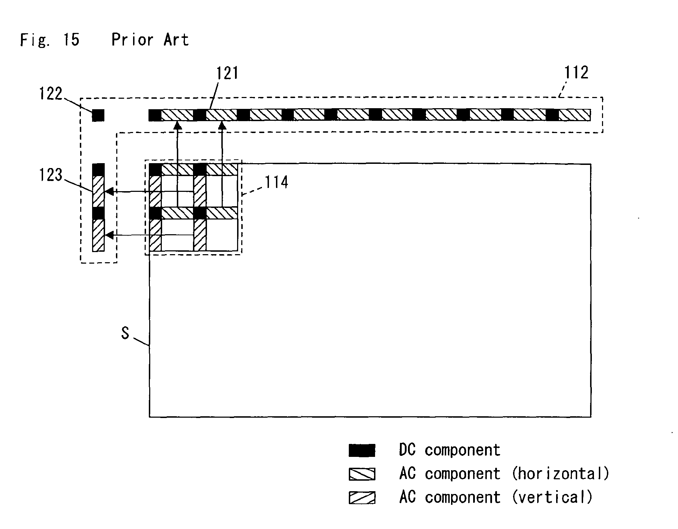

Referring to Fig. 14, details of the units will now be explained. As shown in Fig. 15, the brightness reference value-storing unit 112 includes: a line part 121 for storing DC components and AC components for one line of a VOP; a corner part 122 for storing one DC component; and a left part 123 for storing two sets of a DC component and AC components.

The DC component and the AC components, which are stored by the brightness reference value-storing unit 112, are reference data necessary to perform prediction processes concerning brightness.

As for four brightness components of each of the target macro blocks, two sets (16 pixels) of the DC component and the AC components are allocated to the line part 121. For example, as shown in Fig. 15, when one line of the VOP is composed of five macro blocks, a storing area for (16 x 5 =) 80 pixels are necessary for the inverse prediction thereof. As for four brightness components of the target macro block, two sets (16 pixels) of the DC component and the AC components are allocated to the left part 123.

Concerning brightness, the brightness prediction value-storing unit 114 stores four sets of a DC component and AC components for each target macro block. The DC component and the AC components stored by the brightness prediction value-storing unit 114 are resultant data from the inverse prediction processes concerning brightness.

Similarly, although not shown in Fig. 14, the chroma reference value-storing unit 113 also includes: a line part for storing a DC component and AC components of one line of the VOP; a corner part for storing a DC component; and a left part for storing two sets of a DC component and AC components. The DC component and the AC components, which are stored by the chroma reference value-storing unit 113, are reference data necessary to perform prediction processes concerning chroma.

As for two chroma components of the target macro block, two sets (16 pixels) of the DC component and the AC components are allocated to the line part. For example, as shown in Fig. 15, when one line of the VOP is composed of five macro blocks, a storing area for (16 x 5 =) 80 pixels are necessary for the inverse prediction thereof.

As for two chroma components of the target macro block, two sets (16 pixels) of the DC component and the AC components are allocated to the left part. Concerning chroma, the chroma prediction value-storing unit 115 stores two sets of a DC component and AC components of the target macro block. The DC component and the AC components stored by the chroma prediction value-storing unit 115 are resultant data from the inverse prediction processes concerning chroma.

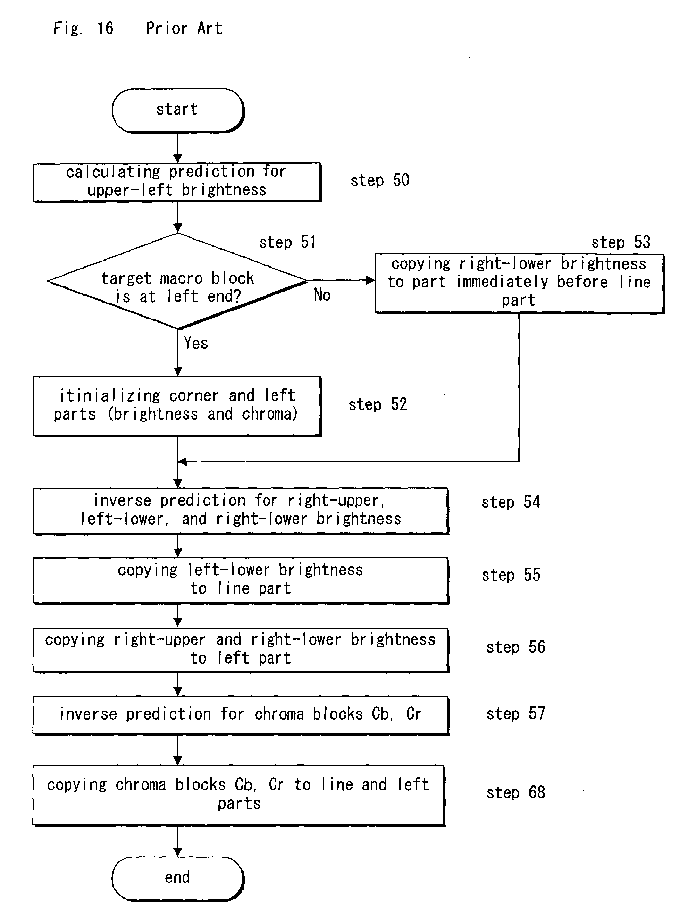

Referring to Fig. 16, the conventional inverse prediction processes will now be explained. In step 50 of Fig. 16, the inverse prediction calculation unit 116 performs inverse prediction calculation for a upper-left brightness block of the target macro block according to the method of MPEG-4. The obtained prediction result is stored by the brightness prediction value-storing unit 114.

At step 51, it is judged whether or not the target macro block is at the left end of the VOP, if so, the process branches to step 52.

At step 52, the prediction control unit 111 initializes the corner part and the left part of the brightness reference value-storing unit 112, and the corner part and the left part of the chroma reference value-storing unit 113.

At step 54, the inverse prediction calculation unit 116 performs inverse prediction calculation for right-upper, left-lower, and right-lower brightness blocks of the target macro block according to the method of MPEG-4. The obtained prediction result is stored by the brightness prediction value-storing unit 114.

At step 55, the prediction control unit 111 copies a DC component and AC components of the left-lower brightness block from the brightness prediction value-storing unit 114 to the line part 121 of the brightness reference value-storing unit 112, thereby utilizing the copied components as reference values for prediction of the next line.

At step 56, the prediction control unit 111 copies DC components and AC components of the upper-left and right-lower brightness blocks from the brightness prediction value-storing unit 114 to the left part 123 of the brightness reference value-storing unit 112, thereby utilizing the copied components as reference values for prediction of a macro block adjacently right to the target macro block.

At step 57, the inverse prediction calculation unit 116 performs inverse prediction calculation for chroma blocks Cb, Cr of the target macro block according to the method of MPEG-4, respectively. The obtained prediction result is stored by the chroma prediction value-storing unit 115.

At step 58, the prediction control unit 111 copies a DC component and AC components of chroma from the chroma prediction values-storing unit 115 to the chroma reference value-storing unit 113. To be more specific, the prediction control unit 111 copies the DC component and the AC components of chroma to the left part. The meaning of this copy is the same as that of step 55.

At step 51, when it is judged the target macro block does not exist at the left end of the VOP, the process branches to step 53. At step 53, the prediction control unit 111 copies a DC component and AC components of the left-lower brightness block, from the brightness prediction value-storing unit 114 to the line part 121 of the brightness reference value-storing unit 112.

When the prediction processes of a current line has completed, reference data necessary for prediction of macro blocks on the next line has been stored by the brightness reference value-storing unit 112 and the chroma reference value-storing unit 113. Furthermore, a storing area for prediction processes can be reduced.

However, the conventional image decoding apparatus is insufficient when a VOP includes a plurality of VPs each including a plurality of macro blocks, and when a macro block is an inter macro block. To be more specific, when the reference block exists in the exterior of the VP to which the target macro block belongs, or when the reference macro block is an inter macro block, initialization of the reference macro block might be imperfect.

Furthermore, according to the above technique, the line part should store data of one line of the VOP Therefore, when size of the one line of the VOP may change, it is difficult to handle the line part. Actually, the line part should be an area for the greatest line assumed. In other words, it is needed to provide technique that is flexibly adaptive with a less storing area even when the size of one line may change.

Since the above technique uses quantization scales (QPa, QPc) at the time of quantization of reference blocks, a data area for storing the quantization scales of the one line of the VOP is needed in addition to the brightness reference value-storing unit and the chroma reference value-storing unit.

In view of the above, an object of the present invention is to provide an inverse prediction apparatus that can reduce the manufacturing cost and earn wide appropriablity.

A first aspect of the present invention provides an inverse prediction apparatus operable to perform inverse prediction processes for variable-length-decoded data of a target macro block, the inverse prediction apparatus comprising: a reference value-storing unit operable to store reference values necessary for inverse prediction processes for the target macro block; an inverse prediction calculation unit operable to perform inverse prediction calculation according to the reference values stored by the reference value-storing unit, to generate an inverse prediction result, wherein the reference value-storing unit comprises: an upper part operable to store an DC component and AC components of a macro block adjacently above the target macro block; a corner part operable to store a DC component of a macro block adjacently upper-left the target macro block; and a left part operable to store an DC component and AC components of a macro block adjacently upper-left to the target macro block.

According to the prior art, the reference value-storing unit for storing data of one line should be provided. Whereas, with this structure, it is sufficient to provide at least the reference value-storing unit operable to store data of one macro block. Regardless of the size of the VOP, the structure can be always fixed. Furthermore, utilizing a storage area less than that of the prior art, the inverse prediction processes can be performed.

A second aspect of the present invention provides an inverse prediction apparatus as defined in the first aspect of the present invention, wherein the AC component and the AC components stored by the upper part are composed of a DC value and AC values of two brightness blocks and two chroma blocks, wherein the DC component stored by the corner part is composed of a DC value of one brightness block and two chroma blocks, and wherein the DC component and the AC components stored by the left part are composed of a DC value and AC values of two brightness blocks and two chroma blocks.

With this structure, it is sufficient that the upper part can store the DC component and the AC components for one macro block. Therefore, regardless of the number of macro blocks composing one line of the VOP, utilizing a storage area less than that of the prior art, the inverse prediction processes can be performed. This reduces the manufacturing cost of the inverse prediction apparatus, and improves appropriablity thereof.

A third aspect of the present invention provides an inverse prediction apparatus as defined in the second aspect of the present invention, further comprising: a reference value-initializing unit operable to initialize a reference value for a block corresponding to a predetermined criterion among the five brightness blocks and the six chroma blocks.

With this structure, the initialization of the reference values can be appropriately performed.

A fourth aspect of the present invention provides an inverse prediction apparatus as defined in the third aspect of the present invention, wherein the predetermined criterion is defined utilizing a position of the target macro block on a video object plane and a position of a video packet on the video object plane, the target macro block belonging to the video packet.

A fifth aspect of the present invention provides an inverse prediction apparatus as defined in the fourth aspect of the present invention, wherein the position of the target macro block and the position of the video packet are evaluated utilizing two-dimensional coordinates on the video object plane.

With these structures, the block to be initialized can be simply and appropriately determined utilizing the two-dimensional coordinates. That is, it is not necessary to memorize the block information, whose items may be a VP number, a macro block type, a quantization scale, and so on., for the reference block, until prediction processes for the target macro block in the next line is performed.

A sixth aspect of the present invention provides an inverse prediction apparatus as defined in the fourth aspect of the present invention, wherein the reference value-initializing unit switches, according to the predetermined criteria, processes into: a first process for initializing all values of the five brightness blocks and the six chroma blocks; a second process for initializing values for seven blocks adjacent to an upper side of the target macro block among the five brightness blocks and the six chroma blocks; a third process for initializing values for seven blocks adjacent to a left side of the target macro block among the five brightness blocks and the six chroma blocks; a fourth process for initializing values for three upper-left blocks adjacent to the target macro block among the five brightness blocks and the six chroma blocks; and a sixth process for not initializing a value for any block among the five brightness blocks and the six chroma blocks.

With this structure, branching to the five patterns, the block to be initialized can be precisely determined.

A seventh aspect of the present invention provides an inverse prediction apparatus as defined in the first aspect of the present invention, further comprising: a reference value-initializing unit operable to initialize the reference values stored by the reference value-storing unit, wherein the reference value-initializing unit judges the target macro block is either an intra macro block or an inter macro block, and wherein, when the target macro block is judged to be the inter macro block, the reference value-initializing unit updates at least one of the reference values stored by the reference value-storing unit.

According to the prior art, since inter macro blocks are never the objects of the AC/DC prediction processes, it is difficult to perform prediction processes when the reference blocks are blocks of the inter macro block. With this structure, even when the target macro block, which is an inter macro block, will be the reference blocks in the future, utilizing the reference value-storing unit, the inverse prediction can be performed without difficulty.

An eighth aspect of the present invention provides an inverse prediction apparatus as defined in the seventh aspect of the present invention, wherein , when the target macro block is judged to be the intra macro block, the reference value-initializing unit multiplies the inverse prediction result by a quantization scale to generate a multiplication result, and wherein the reference value-initializing unit updates the reference values stored by the reference value-storing unit such that the multiplication result is used as reference values for a macro block adjacently right to the target macro block and a macro block adjacently below the target macro block.

With this structure, the reference value can reflect the quantization scale.

A ninth aspect of the present invention provides an inverse prediction apparatus as defined in the seventh aspect of the present invention, wherein, when the target macro block is judged to be the inter macro block, the reference value-initializing unit chooses initial values having a DC value of $2^{(N+2)}$ (N: a bit number of a pixel) and an AC value of zero, and the reference value-initializing unit updates the reference values stored by the reference value-storing unit such that the chosen initial values are used as reference values for a macro block adjacently right to the target macro block and a macro block adjacently below the target macro block.

With this structure, initialization based upon the standard can be carried out.

The above, and other objects, features and advantages of the present invention will become apparent from the following description read in conjunction with the accompanying drawings, in which like reference numerals designate the same elements.

Fig. 1 is a block diagram illustrating an inverse prediction apparatus in an embodiment 1 of the present invention;

Fig. 2 is a flow chart of the inverse prediction apparatus in the embodiment 1 of the present invention;

Fig. 3 is an explanatory drawing of a positional relationship between a target macro block and a reference block in the embodiment 1 of the present invention.

Fig. 4 is a flow chart of reference value-initializing processes in the embodiment 1 of the present invention;

Fig. 5 (a) is an explanatory drawing of following reference value (brightness)-updating processes in the embodiment 1 of the present invention;

Fig. 5 (b) through Fig. 5 (c) are explanatory drawings of following reference value (chroma)-updating processes in the embodiment 1 of the present invention;

Fig. 6 is a flow chart of the inverse prediction apparatus in the embodiment 1 of the present invention;

Fig. 7 is a block diagram illustrating an inverse prediction apparatus in an embodiment 2 of the present invention;

Fig. 8 is an explanatory drawing of a brightness/chroma reference value-storing unit in the embodiment 2 of the present invention;

Fig. 9 is a flow chart of the inverse prediction apparatus in the embodiment 2 of the present invention;

Fig. 10 is an explanatory drawing of two-dimensional coordinate values in the embodiment 1 of the present invention;

Fig. 11 is an explanatory drawing of conventional inverse DC prediction processes;

Fig. 12 is an explanatory drawing of conventional inverse AC prediction processes;

Fig. 13 is a block diagram illustrating a conventional image-decoding apparatus;

Fig. 14 is a block diagram illustrating a conventional inverse prediction-processing unit;

Fig. 15 is an explanatory drawing of a conventional brightness reference value-storing unit; and

Fig. 16 is a flow chart of conventional prediction processes.

Hereafter, embodiments of the present invention will be discussed with reference to the drawings.

(Embodiment 1)

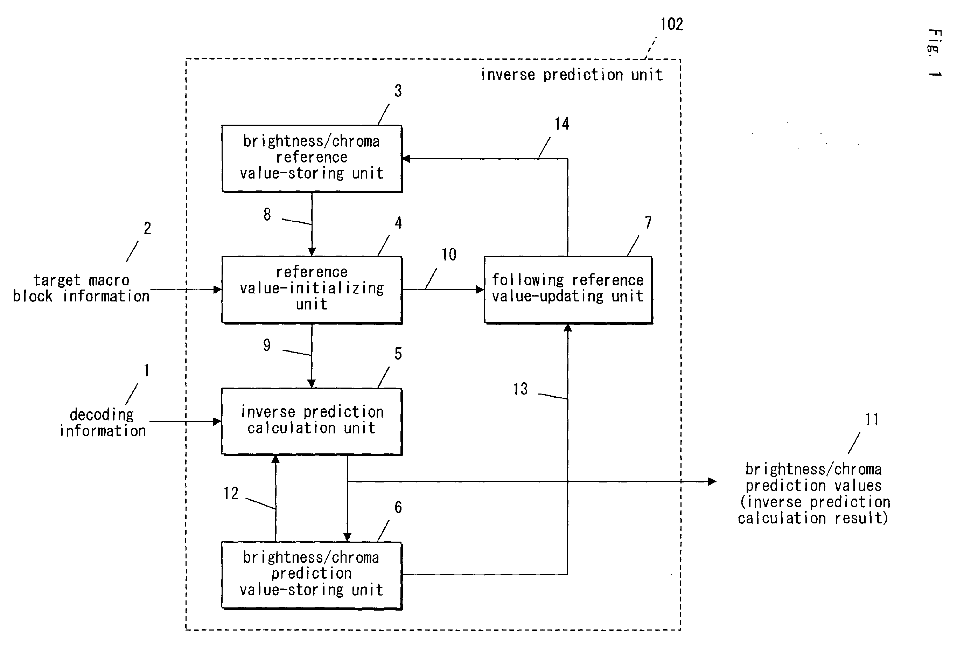

Fig. 1 is a block diagram illustrating an inverse prediction apparatus in an embodiment 1 of the present invention. Basically, a decoding apparatus of this embodiment is configured as shown in Fig. 13. Therefore, detailed explanation concerning elements except an inverse prediction unit 102 is omitted. As mentioned below, contents of the inverse prediction unit 102 of this embodiment remarkably differ from those of Fig. 13.

The inverse prediction unit 102 inputs decoding information 1, which is variable-length-coded data of a target macro block, and target macro block information 2. The inverse prediction unit 102 comprises: a brightness/chroma reference value-storing unit 3; a reference value-initializing unit 4; an inverse prediction calculation unit 5; a brightness/chroma prediction value-storing unit 6; and a following reference value-updating unit 7.

In more detail, the decoding information 1 is inputted into the inverse prediction calculation unit 5 of the inverse prediction unit 102, and the target macro block information 2 is inputted into the reference value-initializing unit 4 of the inverse prediction unit 102.

The brightness/chroma reference value-storing unit 3 outputs original reference data 8 to the reference value-initializing unit 4. The reference value-initializing unit 4 outputs initialized reference data 9 to the inverse prediction calculation unit 5. The reference value-initializing unit 4 outputs an inter macro block instruction flag 10 to the following reference value-updating unit 7.

The inverse prediction calculation unit 5 outputs brightness/chroma prediction values 11 to the brightness/chroma prediction value-storing unit 6 and the inverse quantization unit 103 as an inverse prediction calculation result.

The brightness/chroma prediction value-storing unit 6 outputs brightness/chroma prediction values 12 and 13 to the inverse prediction calculation unit 5 and the following reference value-updating unit 7, respectively.

The following reference value-updating unit 7 outputs updated data 14 to the brightness/chroma reference value-storing unit 3.

The brightness/chroma reference value-storing unit 3 stores reference values necessary for inverse prediction processes of the target macro block. Herein, the reference values stored by the brightness/chroma reference value-storing unit 3 in this embodiment are the products of an inverse prediction result (QFs) and a quantization scale (QP) of the target macro block.

The reference value-initializing unit 4 judges whether or not the reference block exists at the exterior of the VOP or the VP. When exists, the reference value-initializing unit 4 initializes corresponding data stored by the brightness/chroma reference value-storing unit 3.

The target macro block information 2 is, for example, generated by the target macro block-setting unit 100. It is sufficient that the target macro block information 2 can indicate the following items of:

the target macro block being either an inter macro block or an intra macro block;
xy coordinate values (cMBx, cMBy) of the target macro block; and
xy coordinate values (cVPx, cVPy) of a head macro block of the VP to which the target macro block belongs.

The reference value-initializing unit 4 refers to the target macro block information 2, and outputs to the following reference value-updating unit 7, the inter macro block instruction flag 10 that indicates the target macro block is either an inter macro block or an intra macro block.

The inverse prediction calculation unit 5 uses output from the reference value-initializing unit 4 as the reference values, and performs inverse prediction calculation based on the decoding information 1, and outputs an inverse prediction result, which contains the brightness/chroma prediction values 11, to the brightness/chroma prediction value-storing unit 6 and the inverse quantization unit 104.

The brightness/chroma prediction value-storing unit 6 stores the inverse prediction result outputted from the inverse prediction calculation unit 5. The inverse prediction result is returned to the inverse prediction calculation unit 5 as reference values of the brightness blocks in the target macro block, and is outputted to the following reference value-updating unit 7 as reference values for a following target macro block.

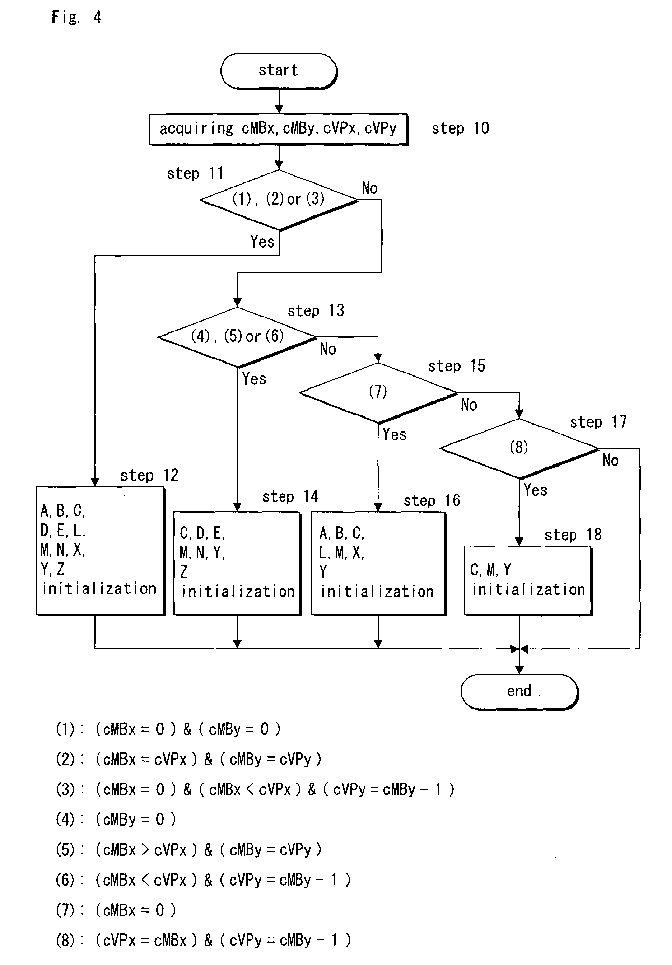

Based on the inter macro block instruction flag 10, the following reference value-updating unit 7 calculates the reference values to be used for a macro block adjacently left to the target macro block and a macro block adjacently below the macro block, and updates a pixel position of the brightness/chroma reference value-storing unit 3. These processes will be explained in more detail later, referring to Fig. 4.

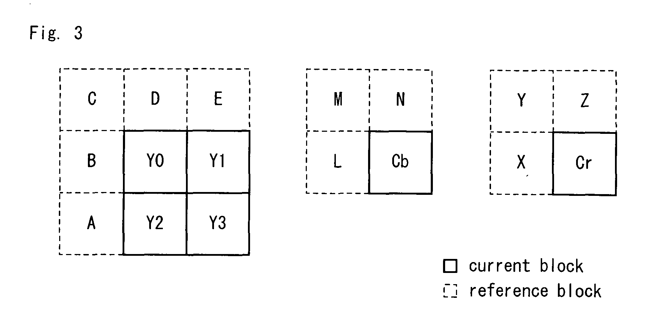

Next, referring to Fig. 3, a relationship between the target macro block and the reference blocks will now be explained. As mentioned above, a macro block is the set of four brightness blocks and two chroma blocks. Each of these six blocks consists of an 8x8 pixels rectangle area. That is, as shown in Fig. 3, four brightness blocks Y0-Y3 and two chroma blocks Cb and Cr belong to one macro block.

As for inverse prediction processes of the four brightness blocks Y0-Y3, five reference blocks A-E, which bound on an upper side, a left side, and an upper-left corner of the brightness blocks Y0-Y3, are needed.

As for inverse prediction processes of one chroma block Cb, three reference blocks L-N, which bound on an upper side, a left side, and an upper-left corner of the chroma block Cb, are needed. As for inverse prediction processes of one chroma block Cr, three reference blocks X-Z, which bound on an upper side, a left side, and an upper-left corner of the chroma block Cr, are needed.

In all, as for inverse prediction of one macro block, eleven reference blocks A-E, L-N, and X-Z are needed.

The reference value-initializing processes by the reference value-initializing unit 4 make each of one or more DC components a value of $2^{(N+2)}$ (N is the bit number of a pixel), and make each of AC components of the one or more reference blocks a value of zero. The one or more DC components and the AC components are those of one or more reference blocks located outside the VP or the VOP among the eleven reference blocks A-E, L-N, and X-Z.

Next, the details of each of the elements are explained. As shown in Fig. 15, the brightness/chroma reference value-storing unit 3 includes: a line part 121 that stores DC components and AC components for one line in one VOP; a corner part 122 that stores one DC component; and a left part 123 that stores two sets of a DC component and AC components.

As for four brightness components of each of the target macro blocks, two set (16 pixels) of a DC component and AC components are allocated to the line part 121. As for two chroma components of the target macro block, two sets (16 pixels) of a DC component and AC components are allocated to the line part 121. As shown in Fig. 15, when one line of the VOP is composed of five macro blocks, the line part 121 is a storing area for (16 x 5 =) 80 pixels.

As for four brightness components, two sets (16 pixels) of a DC component and AC components are allocated to the left part 123. And, as for two chroma components, two sets (16 pixels) of a DC component and AC components are allocated to the left part 123. Therefore, the left part 123 is a storing area that stores data for (16 + 16 =) 32 pixels.

As for four brightness components, one set of a DC component is allocated to the corner part 122. And, as for two chroma components, two sets of a DC component are allocated to the corner part 122. Therefore, the corner part 122 is a storing area that stores data for 3 pixels.

The brightness/chroma prediction value-storing unit 6 itself may be the same as that of the conventional technique shown in Fig. 15. Each of the DC components and the AC components that are stored by the brightness/chroma prediction value-storing unit 6 is the value of the inverse prediction result.

However, note that each of the DC components and the AC components that are stored by the brightness/chroma reference value-storing unit 3 is not the value of the inverse prediction result copied as the reference value, which is that of the prior art, but the product of the value of the inverse prediction value (QF) and the quantization scale (QF) of the target macro block.

Needless to say, the brightness/chroma reference value-storing unit 3 and the brightness/chroma prediction value-storing unit 6 may be configured by two sets of recording medium (e.g. a memory), or may be two areas allocated in the same recording medium.

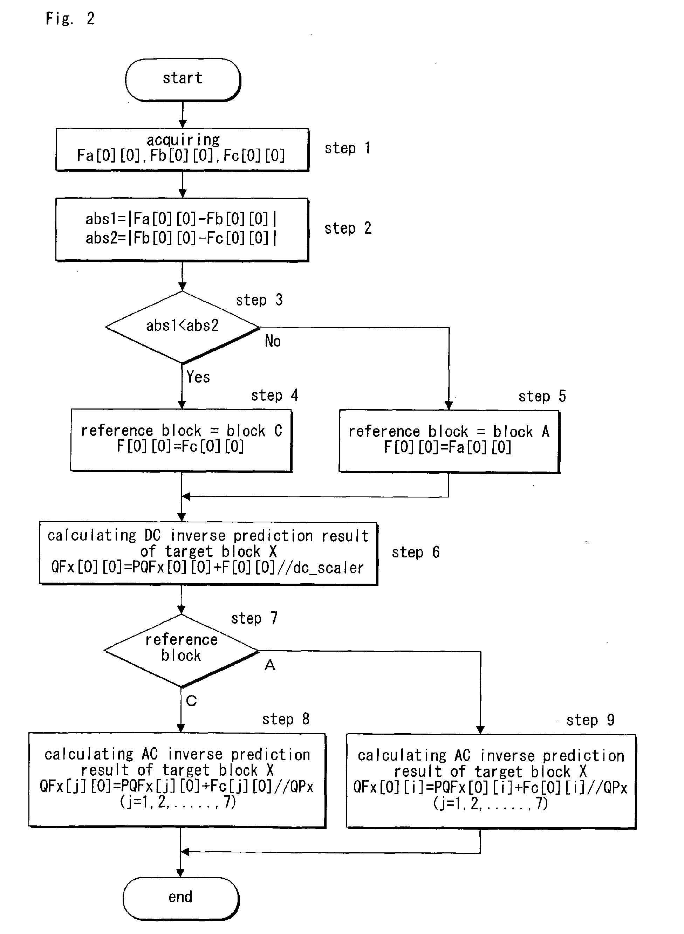

Next, referring to Figs. 2, 10, and 11, the inverse prediction calculation in this embodiment will now be explained.

In order to perform prediction calculation for a target block X, three blocks of a left block (a block A), a upper-left block (a block B), and an upper block (a block C) should be referred.

At step 1 of Fig. 2, the inverse prediction calculation unit 5 refers to the reference value-initializing unit 4 and the brightness/chroma prediction value-storing unit 5, and acquires data of Fa [0] [0], Fb [0] [0], and Fc [0] [0]. Herein, a suffix "a" of "Fa [0] [0]" indicates that "Fa [0] [0]" relates to the block A.

At step 3, the inverse prediction calculation unit 5 calculates two absolute values abs1 and abs2, and the inverse prediction calculation unit 5 performs judgment according to formula 1. When a result thereof is true, the process branches to step 4, otherwise to step 5.

At step 4, the inverse prediction calculation unit 5 treats the block B as a reference block, and substitutes data Fc [0] [0] for the DC component F [0] [0] of the reference value for the following inverse prediction calculation.

At step 5, the inverse prediction calculation unit 5 treats the block A as a reference block, and substitutes data Fa [0] [0] for the DC component F [0] [0] of the reference value for the following inverse prediction calculation.

At step 6, the inverse prediction calculation unit 5 calculates a DC prediction result (QFx [0] [0]) of the target block X. A formula for the above is as follows. This formula is equivalent to formulas 2 and 3.

[Formula 6]

$$QFx\ [0]\ [0] = PQFx\ [0]\ [0] + F\ [0]\ [0]\ //\ dc\_scaler$$

PQFx [0] [0] is DC data of the target block X that has been variable-length-decoded, and is given by the decoding information 1 (See Fig. 1). "dc_scaler" is the quantization scale of the target block X that has been variable-length-decoded, and is given by the decoding information 1 (See Fig. 1).

At step 7, when the reference block is the block C, the process branches to step 8, and when the reference block is the block A, the process branches to step 9.

At step 8, the inverse prediction calculation unit 5 calculates an AC prediction result (QFx [j] [0], j = 1, 2, ..., 7) of the target block X according to the following formula.

[Formula 7]

$$QFx[j]\ [0] = PQFx[j]\ [0] + Fc[j]\ [0]//QPx$$

$$(j=1,2,...,7)$$

When inverse prediction processes are performed to the block C, the values Fc [j] [0] in formula 7 are generated as the products of the inverse prediction result QFc [j] [0] and the quantization scale of the block C. The values Fc [j] [0] are stored by the brightness/chroma reference value-storing unit 3 (See Fig. 1). Accordingly, formula 7 is equivalent to formula 4.

PQFx [j] [0] are AC data of the target block X that has been variable-length-decoded, and are given by the decoding information 1 (See Fig. 1). QPx is the quantization scale of the target block X that has been variable-length-decoded, and is given by the decoding information 1 (See Fig. 1).

At step 9, the inverse prediction calculation unit 5 calculates an AC prediction result (QFx [0] [i], i = 1, 2,..., 7) of the target block X according to the following formula.

[Formula 8]

$$QFx[0][i]=PQFx[0][i]+Fa[0][i]//QPx$$

$$(i=1,2,...,7)$$

When inverse prediction processes are performed to the block A, the values Fa [0] [i] in formula 8 are generated as the products of the inverse prediction result QFa [0] [i] and the quantization scale of the block A. The values Fa [0] [i] are stored by the brightness/chroma reference value-storing unit 3 (See Fig. 1). Accordingly, formula 8 is equivalent to formula 5.

PQFx [0] [i] are AC data of the target block X that has been variable-length-decoded, and are given by the decoding information 1 (See Fig. 1).

As mentioned above, after steps 1 through 9, the inverse prediction calculation unit 5 outputs the prediction result, which is composed of the brightness/chroma prediction values 11, of the target block X.

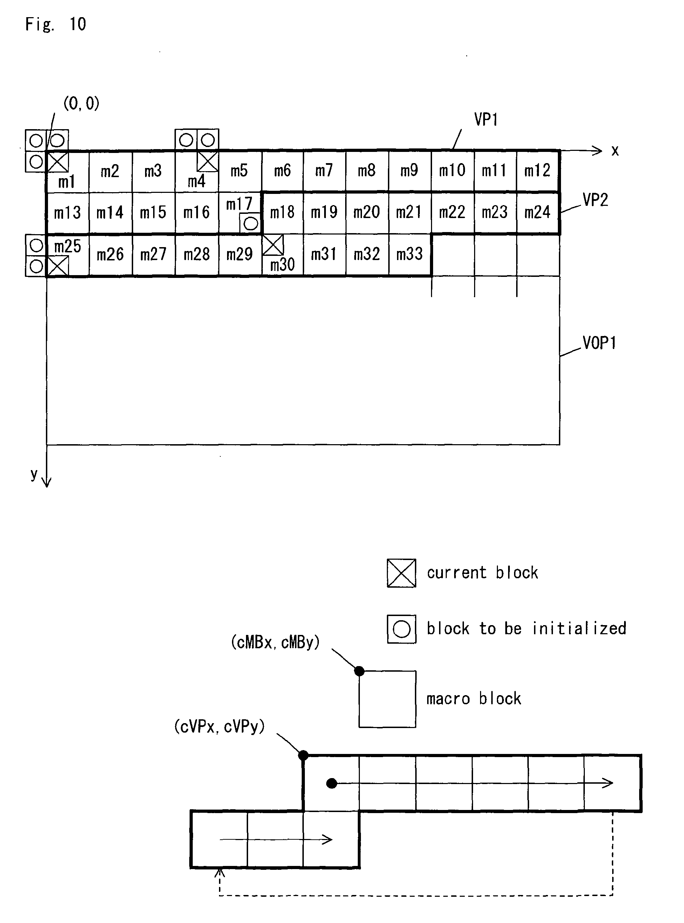

Next, processes of the reference value-initializing unit 4 are explained in detail. Referring to Fig. 10, four two-dimensional coordinate values cMBx, cMBy, and cVPx used in this embodiment and cVPy are explained.

As mentioned above, the four two-dimensional coordinate values cMBx, cMBy, and cVPx and cVPy can be extracted from the target macro block information 2.

As shown in Fig. 10, a vide object plane VOP1 is composed of video packets VP1, VP2, and more. The vide packet VP1 is the set of a plurality of macro blocks m1-m17, and the video packet VP2 is the set of a plurality of macro blocks m18-m33.

It is assumed that an upper-left point, which is also an upper-left point of the macro block ml, of the vide object plane VOP1 is an origin O (0, 0) where a horizontal axis X and a vertical axis Y intersect. That is, the video object plane VOP1 exists on an XY plane.

It is assumed that an upper-left point of the target macro block is a point of (X, Y) = (cMBx, cMBy), and that an upper-left point of a head macro block of a VP to which the target macro block belongs is a point of (X, Y) = (cVPx, cVPy).

To be more specific, each of these four two-dimensional coordinate values cMBx, cMBy, cVPx, and cVPy may be a macro block number or a function value thereof.

The point of (cVPx, cVPy) of the video packet VP1 is an upper-left point of the macro block m1, and the point of (cVPx, cVPy) of the video packet VP2 is an upper-left point of the macro block m 18.

As shown in a lower part of Fig. 10, this is because the processing direction of macro blocks follows the order (See the arrow) mentioned concerning the related art. Furthermore, as mentioned above, the process for determining the block to be initialized is so complicated.

According to this embodiment, however, as mentioned below, simple calculation using these four two-dimensional coordinates makes it possible to classify conditions into five patterns, thereby rapidly determining a block to be initialized. Furthermore, this embodiment depends upon neither the size of the VOP nor that of the VP, the versatility and appropriablity of the inverse prediction apparatus can be improved.

Fig. 4 is a flow chart of reference value-initializing processes in the embodiment 1 of the present invention. At step 10, the reference value-initializing unit 4 extracts the four coordinate values cMBx, cMBy, and cVPx and cVPy from the target macro block information 2.

At step 11, the following conditions are evaluated performing calculation according to the formulas 9-11, based on these coordinate values cMBx, cMBy, and cVPx and cVPy:

> (Condition 1) The position of the target macro block is at the head of the VOP;
> (Condition 2) The position of the target macro block is at the head of the VP; and
> (Condition 3) The position of the target macro block is at the left end of the VOP and at the upper end of the VP.

Herein, formula 9 is a formula evaluating condition 1, formula 10 is a formula evaluating condition 2, and formula 11 is a formula evaluating condition 3.

[Formula 9]

$$( cMBx = 0 ) \& ( cMBy = 0 )$$

[Formula 10]

$$( cMBx = cVPx ) \& (cMBy = cVPy )$$

[Formula 11]

( cMBx = 0 ) & ( cMBx < cVPx ) & ( cVPy = cMBy - 1 )

At step 12, the reference value-initializing unit 4 calculates a logic sum of results of formulas 9-11. When the logic sum is "true", the process branches to step 12, otherwise processes branch to step 13.

When processes branch to step 12, it turns out that all of the reference blocks A-E, L-N, and X-Z of Fig. 3 are outside the VOP and the VP. In this case, the reference value-initializing unit 4 initializes DC components of the reference blocks A-E, L-N, and X-Z to a value of $2^{(N+2)}$ (N is the number of bits of a pixel). And, the reference value-initializing unit 4 initializes AC components of the reference blocks A-E, L-N, and X-Z to a value of zero.

At step 14, the reference value-initializing unit 4 evaluates the following conditions performing calculation according to the formulas 12-14:

(Condition 4) The position of the target macro block is at the upper end of the VOP;
(Condition 5) The position of the target macro block is at the upper end of the VP;
(Condition 6) The position of the target macro block is at the upper end of a head macro block of the VP.

Herein, formula 12 is a formula evaluating condition 4, formula 13 is a formula evaluating condition 5, and formula 14 is a formula evaluating condition 6.

[Formula 12]

( cMBy = 0 )

[Formula 13]

( cMBx > cVPx ) & ( cMBy = cVPy )

[Formula 14]

( cMBx < cVPx ) & ( cVPy = cMBy - 1 )

At step 13, the reference value-initializing unit 4 calculates a logic sum of results of formulas 12-14. When the logic sum is "true", the process branches to step 14, otherwise processes branch to step 15.

When processes branch to step 14, it turns out that the reference blocks C-E, M-N, and Y-Z of Fig. 3 are outside the VOP and the VP. In this case, the reference value-initializing unit 4 initializes DC components of the reference blocks C-E, M-N, and Y-Z to a value of $2^{(N+2)}$ (N is the number of bits of a pixel). And, the reference value-initializing unit 4 initializes AC components of the reference blocks C-E, M-N, and Y-Z to a value of zero.

At step 15, the reference value-initializing unit 4 evaluates the following condition performing calculation according to the formula 15:

(Condition 7) The position of the target macro block is at the left end of the VOP.

When a result thereof is "true", the process branches to step 16, otherwise the process branches to step 17.

[Formula 15]

( cMBx = 0 )

When the process branches to step 16, it turns out that the reference blocks A-C, L-M, and X-Y of Fig. 3 are outside the VOP and the VP. In this case, the reference value-initializing unit 4 initializes DC components of the reference blocks A-C, L-M, and X-Y to a value of $2^{(N+2)}$ (N is the number of bits of a pixel). And, the reference value-initializing unit 4 initializes AC components of the reference blocks A-C, L-M, and X-Y to a value of zero.

At step 17, the reference value-initializing unit 4 evaluates the following condition performing calculation according to the formula 16:

(Condition 8) The position of the target macro block is immediately below a head macro block of the VP to which the target macro block belongs.

[Formula 16]

( cMBx = cVPx ) & ( cVPy = cMBy - 1 )

When a result thereof is "true", the process branches to step 18. When the process branches to step 18, it turns out that the reference blocks C, M, and Y of Fig. 3 are outside the VOP and the VP. In this case, the reference value-initializing unit 4 initializes DC components of the reference blocks C, M, and Y to a value of $2^{(N+2)}$ (N is the number of bits of a pixel). And, the reference value-initializing unit 4 initializes AC components of the reference blocks C, M, and Y to a value of zero.

When the result of step 17 is "false", the process ends, and the reference value-initializing unit 4 does not perform any initialization.

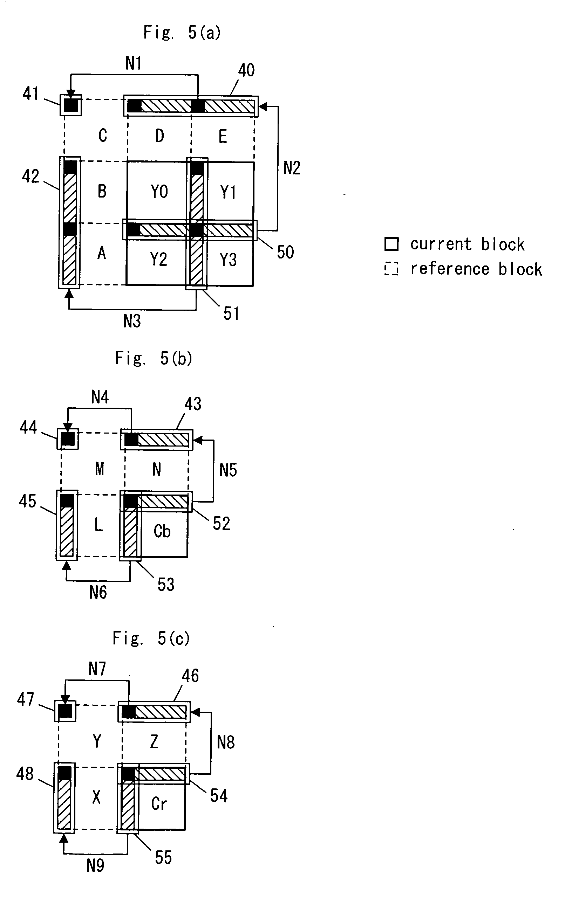

Next, referring to Fig. 5, processes of the following reference value-updating unit 7 will now be explained. Fig. 5 (a) - Fig. 5 (c) show a positional relationship between the target macro block and the reference block necessary for prediction processes of the target macro block, and a relationship between an data-updating source and an data-updating destination.

After the inverse prediction processes concerning the current target macro block, the following reference value-updating unit 7 calculates reference values necessary for inverse prediction processes concerning the next target macro block, and updates data of the brightness/chroma reference value-storing unit 3.

To be more specific, the brightness/chroma reference value-updating unit 7 updates data concerning the brightness blocks as follows. As shown by an arrow N1 of Fig. 5 (a), the brightness/chroma reference value-updating unit 7 copies a DC component for the block E among the reference values stored by the line part 121 of the brightness/chroma reference value-storing unit 3, into a brightness block portion of the reference value-storing area 41 of the corner part 122.

Next, shown by an arrow N2 of Fig. 5 (a), the brightness/chroma reference value-updating unit 7 multiplies prediction result upper data 50 of the blocks Y2 and Y3, which is stored by the brightness/chroma prediction value-storing unit 6, by the quantization scale (QP), and copies the multiplied result into the reference value-storing area 40 for the blocks D and E of the line part 121 of the reference value-storing unit 3.

When the target macro block is an inter macro block, this updating is not performed, but each of DC components of the reference value-storing area 40 for the blocks D and E of the line part 121 of the brightness/chroma reference value-storing area 3 is initialized by a value of $2^{(N+2)}$ (N is the number of bits of a pixel), and each of AC components thereof is initialized by a value of zero.

Next, shown by an arrow N3 of Fig. 5 (a), the brightness/chroma reference value-updating unit 7 multiplies prediction result left data 51 of the blocks Y1 and Y3, which is stored by the brightness/chroma prediction value-storing unit 6, by the quantization scale (QP), and copies the multiplied result into a brightness block portion of the blocks A and B of the reference value-storing area 42 of the left part 123 of the reference value-storing unit 3.

When the target macro block is an inter macro block, this updating is not performed, but each of DC components of the reference value-storing area 42 for the blocks A and B of the left part 123 of the brightness/chroma reference value-storing area 3 is initialized by a value of $2^{(N+2)}$ (N is the number of bits of a pixel), and each of AC components thereof is initialized by a value of zero.

The brightness/chroma reference value-updating unit 7 updates data concerning the block Cb of the chroma blocks as follows. As shown by an arrow N4 of Fig. 5 (b), the brightness/chroma reference value-updating unit 7 copies a DC component for the block N among the reference values stored by the line part 121 of the brightness/chroma reference value-storing unit 3, into the reference value-storing area 44 for the chroma block Cb of the corner part 122.

Next, shown by an arrow N5 of Fig. 5 (a), the brightness/chroma reference value-updating unit 7 multiplies prediction result upper data 52 of the block Cb, which is stored by the brightness/chroma prediction value-storing unit 6, by the quantization scale (QP), and copies the multiplied result into the reference value-storing area 43 for the block N of the line part 121 of the brightness/chroma reference value-storing unit 3.

When the target macro block is an inter macro block, this updating is not performed, but a DC component of the reference value-storing area 43 for the block D of the left part 121 of the brightness/chroma reference value-storing area 3 is initialized by a value of $2^{(N+2)}$ (N is the number of bits of a pixel), and each of AC components thereof is initialized by a value of zero.

Next, shown by an arrow N6 of Fig. 5 (b), the brightness/chroma reference value-updating unit 7 multiplies prediction result left data 53 of the block Cb, which is stored by the brightness/chroma prediction value-storing unit 6, by the quantization scale (QP), and copies the multiplied result into the reference value-storing area 45 for the block L of the left part 123 of the brightness/chroma reference value-storing unit 3.

When the target macro block is an inter macro block, this updating is not performed, but a DC component of the reference value-storing area 45 for the block L of the left part 123 of the brightness/chroma reference value-storing area 3 is initialized by a value of $2^{(N+2)}$ (N is the number of bits of a pixel), and each of AC components thereof is initialized by a value of zero.

The brightness/chroma reference value-updating unit 7 updates data concerning the block Cr of the chroma blocks as follows. As shown by an arrow N7 of Fig. 5 (c), the brightness/chroma reference value-updating unit 7 copies a DC component for the block Z among the reference values stored by the line part 121 of the brightness/chroma reference value-storing unit 3, into the reference value-storing area 47 for the chroma block Cr of the corner part 122.

Next, shown by an arrow N8 of Fig. 5 (c), the brightness/chroma reference value-updating unit 7 multiplies prediction result upper data 54 of the block Cr, which is stored by the brightness/chroma prediction value-storing unit 6, by the quantization scale (QP), and copies the multiplied result into the reference value-storing area 46 for the block Z of the line part 121 of the brightness/chroma reference value-storing unit 3.

When the target macro block is an inter macro block, this updating is not performed, but a DC component of the reference value-storing area 46 for the block Z of the left part 121 of the brightness/chroma reference value-storing area 3 is initialized by a value of $2^{(N+2)}$ (N is the number of bits of a pixel), and each of AC components thereof is initialized by a value of zero.

Next, shown by an arrow N9 of Fig. 5 (c), the brightness/chroma reference value-updating unit 7 multiplies prediction result left data 55 of the block Cr, which is stored by the brightness/chroma prediction value-storing unit 6, by the quantization scale (QP), and copies the multiplied result into the reference value-storing area 48 for the block X of the left part 123 of the brightness/chroma reference value-storing unit 3.

When the target macro block is an inter macro block, this updating is not performed, but a DC component of the reference value-storing area 48 for the block X of the left part 123 of the brightness/chroma reference value-storing area 3 is initialized by a value of $2^{(N+2)}$ (N is the number of bits of a pixel), and each of AC components thereof is initialized by a value of zero.

Each of updated values stored by the corner part 122 and the left part 123 of the brightness/chroma reference value-storing unit 3 is used as a reference value when inverse prediction processes for a macro block adjacently left to the target macro block are carried out.

Normally, since decoding processes of the VOP are performed in order of a raster, when the inverse prediction processes concerning the current target macro block has completed, a macro block adjacently left to the current macro block becomes a new target macro block.

Each of updated values stored by the line part 121 of the brightness/chroma reference value-storing unit 3 is used as a reference value when inverse prediction processes for a macro block adjacently below the target macro block are carried out.

When decoding processes of the VOP are performed in order of a raster, the immediately below macro block will become a new target macro block after decoding processes for one line complete.

The quantization scale (QP) of the target macro block may be changed with respect to the brightness block, the chroma block, the DC component, and the AC components.

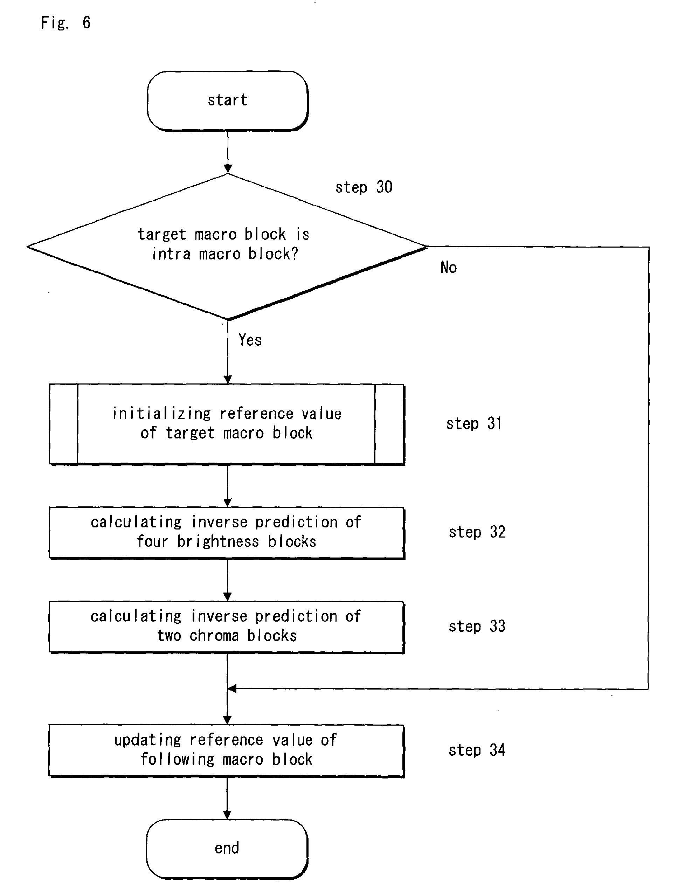

Next, referring to Fig. 6, processes of the inverse prediction unit 102 will now be explained. At step 30 of Fig. 6, the reference value-initializing unit 4 judges the target macro block is either an intra macro block or an inter macro block target, with reference to the target macro block information 2. When the target macro block is an inter macro block, the process blanches to step 31, otherwise to step 34.

As shown in Fig. 4, at step 31, the reference value-initializing unit 4 initializes the reference values pre-stored by the brightness/chroma reference value-storing unit 3.

At step 32, using the reference values determined at step 31 and decoding information 1, the inverse prediction calculation unit 5 performs inverse prediction calculation concerning the four brightness blocks (See Fig. 2), and stores the inverse prediction result into the brightness/chroma prediction value-storing unit 6.

At step 33, using the reference values determined at step 31 and decoding information 1, the inverse prediction calculation unit 5 performs inverse prediction calculation concerning the two chroma blocks (See Fig. 2), and stores the inverse prediction result into the brightness/chroma prediction value-storing unit 6.

At step 34, when the target macro block is an intra macro block, the following reference value-updating unit 7 updates data of the brightness/chroma reference value-storing unit 3 using the inverse prediction result stored by the brightness/chroma prediction value-storing unit 6. When the target macro block is an inter macro block, the following reference value-updating unit 7 initializes the brightness/chroma reference value-storing unit 3.

According to the present embodiment, the four two-dimensional coordinates values are used, and the reference values can be simply and precisely updated.

Since each of sizes of the VOP and the VP may be arbitrary, appropriablity of hardware can be improved. When simple calculation (addition, subtraction, logical product, and logical sum) is performed, target blocks to be initialized can be managed. Thereby, cost for manufacturing the hardware can be reduced.

When inverse prediction processes for the following target macro block should be performed, even if quantization scale for a reference macro block is unknown, and further even if a type (inter/intra) of the reference macro block is unknown, the inverse prediction processes can be performed without a hitch. In other words, since the above-mentioned information does not have to be stored, a storage area can be saved, thereby reducing hardware cost.

(Embodiment 2)

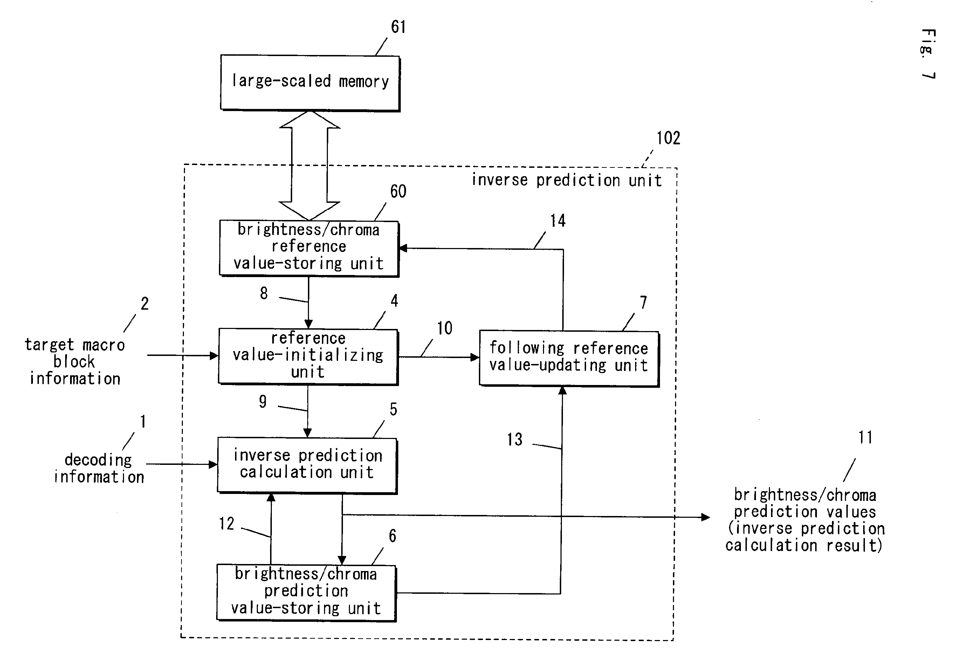

Fig. 7 is a block diagram illustrating an inverse prediction unit in an embodiment 2 of the present invention. To avoid duplicated explanation, the same symbols are given to elements each having the same function as elements of the embodiment 1.

Differing from the embodiment 1, a brightness/chroma reference value-storing unit 60 of an inverse prediction unit 102 according to the embodiment 2 has a function communicating with a large-scaled memory 61.

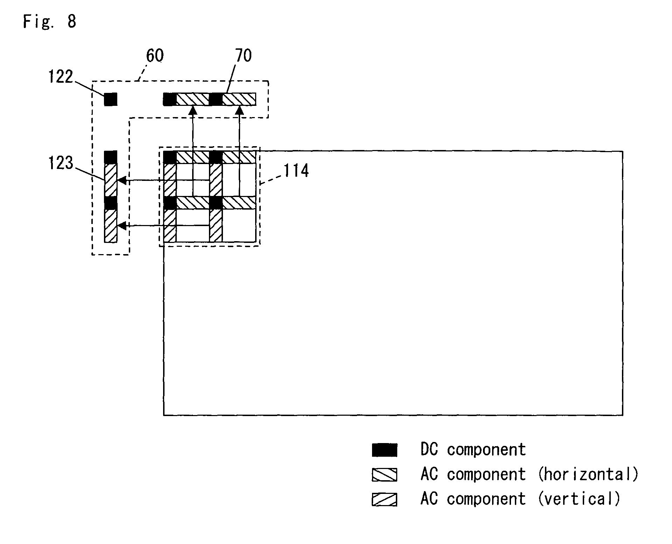

As shown in Fig. 8, the brightness/chroma reference value-storing unit 60 comprises: an upper part 70 that stores DC components and AC components of a macro block adjacently upper to the target macro block; a corner part 122 that stores a DC component; and a left part 123 that stores DC components and AC components of a macro block adjacently left to the target macro block. This point is remarkably different from the embodiment 1.

As for four brightness components of each of the target macro blocks, two sets (16 pixels) of a DC component and AC components are allocated to the upper part 70. As for two chroma components of the target macro block, two sets (16 pixels) of a DC component and AC components are allocated to the upper part 70.

Therefore, the upper part 70 is a storing area that stores data for (16 + 16 =) 32 pixels.

Similarly to the embodiment 1, the reference values stored by the brightness/chroma reference value-storing unit 60 are the products of an inverse prediction result (QFs) and a quantization scale (QP) of the target macro block.

In this embodiment, the upper part 70 of the brightness/chroma reference value-storing unit 60 is controlled from an external control unit (e.g. an unshown processor), and has the function to exchange data stored therein with the large-scaled memory 61. It is premised that general image-decoding processes for the VOP are performed in units of a macro block and in order of a raster.

The reference values, which are stored in the corner part 122 and the left part 123 at the end of inverse prediction processes of the target macro block, are used when inverse prediction processes of the next target macro block are performed. However, the reference values stored in the upper part 70 are used when inverse prediction processes of a macro block immediately below the target macro block are performed. The inverse prediction processes of the macro block immediately below the target macro block are performed after the time for decoding processes for one line from the target macro block.

According to the conventional technique, in order to hold necessary data in the meantime, a line part 121 that stores data for one line, should be provided. However, in this embodiment, data for one line do not have to be stored, it is sufficient that the inverse prediction unit 102 can store only reference data for the target macro block itself.

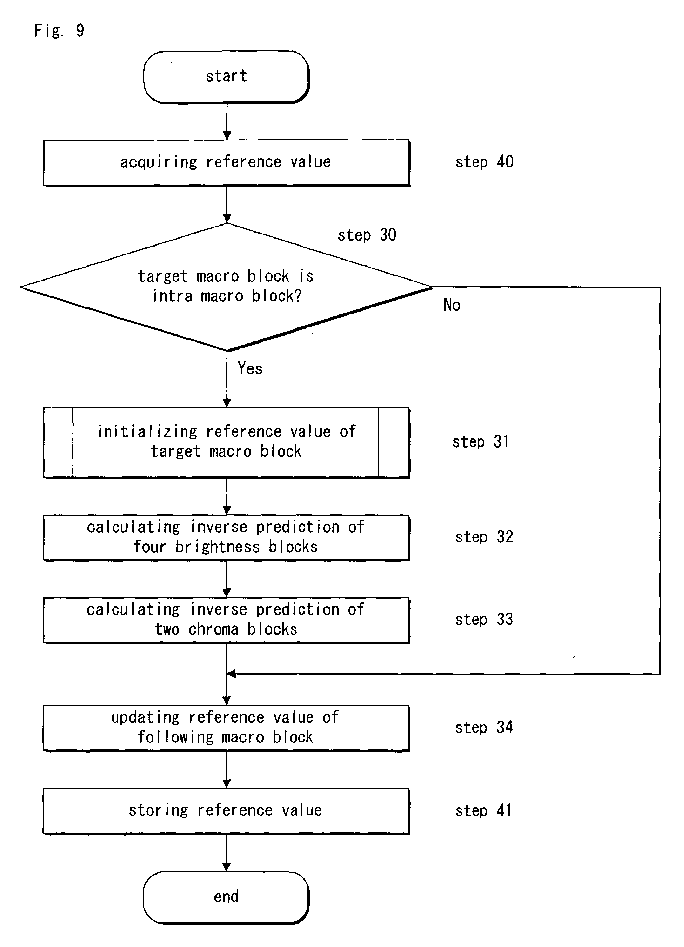

Fig. 9 is a flow chart showing inverse prediction processes in the embodiment 2 of the present invention. In Fig. 9, steps 40 and 41 are different from those of Fig. 6.

At step 40, the large-scaled memory 61 transmits upper reference values necessary for the inverse prediction processes of the target macro block into the upper part 70 of the brightness/chroma reference value-storing unit 60.

The transmitted data has been already stored in the large-scaled memory 61 after inverse prediction processes of the macro block adjacently upper to the target macro block. When the immediately upper macro block does not exist, that is, the target macro block exists on the top of the VOP, step 40 may be omitted.

At step 41, reference values necessary for the inverse prediction processes of a macro block immediately below the target macro block are transmitted and stored into the large-scaled memory 61.

According to the prior art, the brightness/chroma reference value-storing unit that stores data of one line, should be provided. Whereas, according to this embodiment, it is sufficient that the brightness/chroma reference value-storing unit that stores data of only one macro block is provided. Therefore, a storage area to be implemented to the inverse prediction calculation unit can be reduced.

Furthermore, this embodiment does not depend upon the size of the VOP In other words, regardless of the size of the VOP, fixed configuration can be adapted, and appropriablity is fine when implemented.

The present invention can suppress a cost for implementing a data storing area necessary for prediction. When the size of image to be decoded/encoded may be changed, since data-storing area necessary for prediction is fixed, change of design is not needed, and appropriablity thereof is kept fine.

Having described preferred embodiments of the invention with reference to the accompanying drawings, it is to be understood that the invention is not limited to those precise embodiments, and that various changes and modifications may be effected therein by one skilled in the art without departing from the scope or spirit of the invention as defined in the appended claims.

## Claims

**1.** An inverse prediction apparatus operable to perform inverse prediction processes for variable-length-decoded data of a target macro block, said inverse prediction apparatus comprising:

a reference value-storing unit (3) operable to store reference values (8) necessary for inverse prediction processes for the target macro block;
an inverse prediction calculation unit (5) operable to perform inverse prediction calculation according to the reference values (8) stored by said reference value-storing unit (6), to generate an inverse prediction result (11),

wherein said reference value-storing unit (3) comprises:

an upper part (40), (43), (46) operable to store a DC component and AC components of a macro block adjacently above the target macro block;
a corner part (41), (44), (47) operable to store a DC component of a macro block adjacently upper-left the target macro block; and
a left part (42), (45), (48) operable to store a DC component and AC components of a macro block adjacently upper-left to the target macro block.

**2.** The inverse prediction apparatus as claimed in claim 1, wherein the DC component and the AC components stored by said upper part (40), (43), (46) are composed of a DC value and AC values of two brightness blocks and two chroma blocks, wherein the DC component stored by said corner part (41), (44), (47) is composed of a DC value of one brightness block and two chroma blocks, and wherein the DC component and the AC components stored by said left part (42), (45), (48) are composed of a DC value and AC values of two brightness blocks and two chroma blocks.

3. The inverse prediction apparatus as claimed in claim 2, further comprising:

    a reference value-initializing unit (4) operable to initialize a reference value for a block corresponding to a predetermined criterion among the five brightness blocks and the six chroma blocks.

4. The inverse prediction apparatus as claimed in claim 3, wherein the predetermined criterion is defined utilizing a position of the target macro block on a video object plane and a position of a video packet on the video object plane, the target macro block belonging to the video packet.

5. The inverse prediction apparatus as claimed in claim 4, wherein the position of the target macro block and the position of the video packet are evaluated utilizing two-dimensional coordinates (cMBx), (cMBy), (cYPx), (cVPy) on the video object plane.

6. The inverse prediction apparatus as claimed in claim 4, wherein said reference value-initializing unit (4) switches, according to the predetermined criteria, processes into:

    a first process for initializing all values of the five brightness blocks and the six chroma blocks;
    a second process for initializing values for seven blocks adjacent to an upper side of the target macro block among the five brightness blocks and the six chroma blocks;
    a third process for initializing values for seven blocks adjacent to a left side of the target macro block among the five brightness blocks and the six chroma blocks;
    a fourth process for initializing values for three upper-left blocks adjacent to the target macro block among the five brightness blocks and the six chroma blocks; and
    a sixth process for not initializing a value for any block among the five brightness blocks and the six chroma blocks.

7. The inverse prediction apparatus as claimed in claim 1, further comprising:

    a reference value-initializing unit (4) operable to initialize the reference values stored by said reference value-storing unit (3),

wherein said reference value-initializing unit (4) judges the target macro block is either an intra macro block or an inter macro block, and
wherein, when the target macro block is judged to be the inter macro block, said reference value-initializing unit (4) updates at least one of the reference values stored by said reference value-storing unit (3).

8. The inverse prediction apparatus as claimed in claim 7, wherein, when the target macro block is judged to be the intra macro block, said reference value-initializing unit (4) multiplies the inverse prediction result (11) by a quantization scale to generate a multiplication result, and
wherein said reference value-initializing unit (4) updates the reference values stored by said reference value-storing unit (3) such that the multiplication result is used as reference values for a macro block adjacently right to the target macro block and a macro block adjacently below the target macro block.

9. The inverse prediction apparatus as claimed in claim 7, wherein, when the target macro block is judged to be the inter macro block, said reference value-initializing unit (4) chooses initial values having a DC value of $2^{(N+2)}$ (N: a bit number of a pixel) and a AC value of zero, and said reference value-initializing unit (4) updates the reference values stored by said reference value-storing unit (3) such that the chosen initial values are used as reference values for a macro block adjacently right to the target macro block and a macro block adjacently below the target macro block.

10. A decoding apparatus, comprising:

    a target macro block-setting unit (100) operable to set a target macro block on a video object plane;
    a target macro block-extracting unit (101) operable to variable-length-decode data of the target macro block set by said target macro block-setting unit (100), to generate variable-length-decoded data of the target macro block;
    an inverse prediction unit (102) operable to perform inverse prediction processes for the variable-length-decoded data of the target macro block to generate an inverse prediction result;
    an inverse quantization unit (103) operable to perform inverse quantization for the inverse prediction result to generate an inverse quantized result; and
an inverse DCT unit (104) operable to perform inverse discrete cosine transformation for the inverse quantized result to generate decoded data,

wherein said inverse prediction unit (102) comprises:

a reference value-storing unit (3) operable to store reference values necessary for inverse prediction processes for the target macro block;
an inverse prediction calculation unit (5) operable to perform inverse prediction calculation according to the reference values stored by said reference value-storing unit (3) to generate an inverse prediction result,

wherein said reference value-storing unit (3) comprises:

an upper part (40), (43), (46) operable to store a DC component and AC components of a macro block adjacently above the target macro block;
a corner part (41), (44), (47) operable to store a DC component of a macro block adjacently upper-left the target macro block; and
a left part (42), (45), (48) operable to store a DC component and AC components of a macro block adjacently upper-left to the target macro block.

Fig. 1

Fig. 2

start

acquiring
Fa[0][0],Fb[0][0],Fc[0][0]  step 1

abs1=|Fa[0][0]-Fb[0][0]|
abs2=|Fb[0][0]-Fc[0][0]|  step 2

step 3
abs1<abs2  No

Yes

step 4
reference block = block C
F[0][0]=Fc[0][0]

step 5
reference block = block A
F[0][0]=Fa[0][0]

calculating DC inverse prediction result
of target block X
QFx[0][0]=PQFx[0][0]+F[0][0]//dc_scaler  step 6

step 7
reference
block  A

C

step 8
calculating AC inverse prediction
result of target block X
QFx[j][0]=PQFx[j][0]+Fc[j][0]//QPx
(j=1,2,......,7)

step 9
calculating AC inverse prediction
result of target block X
QFx[0][i]=PQFx[0][i]+Fc[0][i]//QPx
(j=1,2,......,7)

end

Fig. 3

| C | D | E |
|---|-----|-----|
| B | Y0 | Y1 |
| A | Y2 | Y3 |

| M | N |
|---|-----|
| L | Cb |

| Y | Z |
|---|-----|
| X | Cr |

☐ current block
⊡ reference block

Fig. 4

```
                        ┌─────────────┐
                        │    start    │
                        └─────────────┘
                               │
                               ▼
        ┌──────────────────────────────────────────┐
        │ acquiring cMBx,cMBy,cVPx,cVPy │   step 10
        └──────────────────────────────────────────┘
                               │
       step 11                 ▼
                   ◇(1),(2)or(3)◇────── No
                        │                 │
                       Yes                │
                        │                 ▼
                        │        step 13
                        │          ◇(4),(5)or(6)◇──── No
                        │               │                │
                        │              Yes               ▼
                        │               │       step 15
                        │               │         ◇(7)◇──── No
                        │               │           │         │
                        │               │          Yes        ▼
                        │               │           │   step 17
                        │               │           │     ◇(8)◇──── No
                        │               │           │       │        │
                        │               │           │      Yes       │
  step 12               │               │           │       │        │
  ┌──────────┐          │ step 14       │ step 16   │  step 18        │
  │A,B,C,    │          │┌────────┐     │┌────────┐ │ ┌────────┐      │
  │D,E,L,    │          ││C,D,E,  │     ││A,B,C,  │ │ │C,M,Y   │      │
  │M,N,X,    │          ││M,N,Y,  │     ││L,M,X,  │ │ │initia- │      │
  │Y,Z       │          ││Z       │     ││Y       │ │ │lization│      │
  │initiali- │          ││initia- │     ││initia- │ │ └────────┘      │
  │zation    │          ││lization│     ││lization│ │     │          │
  └──────────┘          │└────────┘     │└────────┘ │     │          │
        │               │     │         │    │      │     ▼          │
        └───────────────┴─────┴─────────┴────┴──────┴──►─────◄────────┘
                                                      ┌─────────────┐
                                                      │    end      │
                                                      └─────────────┘
```

(1): ( cMBx = 0 ) & ( cMBy = 0 )

(2): ( cMBx = cVPx ) & ( cMBy = cVPy )

(3): ( cMBx = 0 ) & ( cMBx < cVPx ) & ( cVPy = cMBy − 1 )

(4): ( cMBy = 0 )

(5): ( cMBx > cVPx ) & ( cMBy = cVPy )

(6): ( cMBx < cVPx ) & ( cVPy = cMBy − 1 )

(7): ( cMBx = 0 )

(8): ( cVPx = cMBx ) & ( cVPy = cMBy − 1 )

Fig. 5(a)

Fig. 5(b)

Fig. 5(c)

Fig. 6

```
                    ┌─────────────┐
                    │    start    │
                    └─────────────┘
                           │
                           ▼
                        ╱     ╲           step 30
                      ╱         ╲
                    ╱  target macro block is ╲ ──────────────────┐  No
                    ╲  intra macro block?    ╱                   │
                      ╲                     ╱                     │
                        ╲     │    ╱                              │
                          Yes │                                  │
                              ▼                                  │
             ┌────────────────────────────┐                     │
             │  initializing reference value │    step 31        │
             │     of target macro block     │                  │
             └────────────────────────────┘                     │
                           │                                     │
                           ▼                                     │
             ┌────────────────────────────┐                     │
             │ calculating inverse prediction of │  step 32      │
             │     four brightness blocks    │                  │
             └────────────────────────────┘                     │
                           │                                     │
                           ▼                                     │
             ┌────────────────────────────┐                     │
             │ calculating inverse prediction of │  step 33      │
             │     two chroma blocks        │                   │
             └────────────────────────────┘                     │
                           │◄────────────────────────────────────┘
                           ▼
             ┌────────────────────────────┐
             │   updating reference value of │   step 34
             │     following macro block    │
             └────────────────────────────┘
                           │
                           ▼
                    ┌─────────────┐
                    │     end     │
                    └─────────────┘
```

Fig. 7

EP 1 585 340 A2

Fig. 7

Fig. 8

DC component

AC component (horizontal)

AC component (vertical)

Fig. 9

```
        ┌─────────────────────┐
        │        start        │
        └─────────────────────┘
                   │
                   ▼
   ┌─────────────────────────────┐
   │  acquiring reference value  │        step 40
   └─────────────────────────────┘
                   │
                   ▼
            ◇ step 30
       ╱                   ╲
      ╱  target macro block is ╲────── No ──────┐
      ╲  intra macro block?    ╱                │
       ╲                   ╱                     │
            │  Yes                               │
            ▼                                    │
   ┌─────────────────────────────┐               │
   │  initializing reference     │    step 31    │
   │  value of target macro block│               │
   └─────────────────────────────┘               │
                   │                             │
                   ▼                             │
   ┌─────────────────────────────┐               │
   │  calculating inverse        │    step 32    │
   │  prediction of four         │               │
   │  brightness blocks          │               │
   └─────────────────────────────┘               │
                   │                             │
                   ▼                             │
   ┌─────────────────────────────┐               │
   │  calculating inverse        │    step 33    │
   │  prediction of two chroma   │               │
   │  blocks                     │               │
   └─────────────────────────────┘               │
                   │◄────────────────────────────┘
                   ▼
   ┌─────────────────────────────┐
   │  updating reference value   │    step 34
   │  of following macro block   │
   └─────────────────────────────┘
                   │
                   ▼
   ┌─────────────────────────────┐
   │  storing reference value    │    step 41
   └─────────────────────────────┘
                   │
                   ▼
        ┌─────────────────────┐
        │         end         │
        └─────────────────────┘
```

Fig. 10

| X | current block |
|---|---|

| O | block to be initialized |
|---|---|

(cMBx, cMBy)

macro block

(cVPx, cVPy)

Fig. 11    Prior Art

Fb[0][0]                Fc[0][0]

B                       C

Fa[0][0]                QFx[0][0]

A                       X

Fig. 12    Prior Art

Fb[0][0]                QFc[j][0]

B                       C

A                       X    QFx[j][0]

QFa[0][i]               QFx[0][i]

Fig. 13   Prior Art

coded image signal

target macro block-
extracting unit
101

inverse prediction unit
102

inverse quantization unit
103

inverse DCT unit
104

image memory
(reproduced image)
105

target macro block-
setting unit
100

Fig. 14 Prior Art

EP 1 585 340 A2

Fig. 15    Prior Art

■  DC component

▨  AC component (horizontal)

▧  AC component (vertical)

Fig. 16    Prior Art

start

calculating prediction for
upper-left brightness → step 50

step 51

target macro block
is at left end? — No → copying right-lower brightness
to part immediately before line
part ← step 53

Yes

itinializing corner and left
parts (brightness and chroma) → step 52

inverse prediction for right-upper,
left-lower, and right-lower brightness → step 54

copying left-lower brightness
to line part → step 55

copying right-upper and right-lower brightness
to left part → step 56

inverse prediction for chroma blocks Cb, Cr → step 57

copying chroma blocks Cb, Cr to line and left
parts → step 68

end